# EUROPÄISCHE PATENTANMELDUNG

(11) **EP 1 728 685 A1**
(43) Veröffentlichungstag der Anmeldung: **06.12.2006**
(21) Anmeldenummer: 06009612.0
(22) Anmeldetag: 10.05.2006
(51) Int. Cl.: B60R 7/02, B60R 5/04

(54) **Stauvorrichtung für einen Fahrzeugkofferraum**

(30) Priorität: 01.06.2005 DE 102005026671
(71) Anmelder: BOS GmbH & Co. KG, 73760 Ostfildern (DE)
(72) Erfinder: Haspel, Klaus, 72108 Rottenburg (DE); Gass, Dirk, 74389 Cleebronn (DE)
(74) Vertreter: Patentanwälte Ruff, Wilhelm, Beier, Dauster & Partner

(57) **Zusammenfassung**

Eine Stauvorrichtung für einen Fahrzeugkofferraum mit fahrzeugseitigen Längsführungen (8) im Bereich einer Oberseite des Fahrzeugkofferraumes, in denen ein Schubladenteil längsverschiebbar geführt ist, ist bekannt.
Erfindungsgemäß umfassen die Längsführungen (8) teleskopförmig ausziehbare Führungsschienen, an denen das Schubladenteil befestigt ist, wobei die Führungsschienen mittels spielfreier Wälzlagerungen ausziehbar gelagert sind.
Einsatz für Personenkraftwagen.

## Beschreibung

Die Erfindung betrifft eine Stauvorrichtung für einen Fahrzeugkofferraum mit fahrzeugseitigen Längsführungen im Bereich einer Oberseite des Fahrzeugkofferraumes, in denen ein Schubladenteil längsverschiebbar geführt ist.

Eine derartige Stauvorrichtung ist aus der DE 101 12 272 A1 bekannt. Die bekannte Stauvorrichtung umfasst ein Schubladenteil, das zwischen einer Ruheposition und einer Aufnahmeposition in kofferraumseitigen Führungen verschiebbar gelagert ist. Die kofferraumseitigen Führungen sind in einem oberen Bereich des Kofferraumes als C-förmige Führungsprofile ausgeführt und an Kofferraumseitenwandungen oder an einer oberen Deckwandung des Kofferraumes, die auch als Hutablage bezeichnet wird, befestigt.

Aufgabe der Erfindung ist es, eine Stauvorrichtung der eingangs genannten Art zu schaffen, die komfortabel bedienbar und platzsparend sowie störungsfrei im Kofferraum unterbringbar ist.

Diese Aufgabe wird dadurch gelöst, dass die Längsführungen teleskopförmig ausziehbare Führungsschienenanordnungen umfassen, an denen das Schubladenteil befestigt ist, wobei die Führungsschienenanordnungen mittels spielfreier Wälzlagerungen ausziehbar gelagert sind. Die teleskopförmig ausziehbaren Führungsschienenanordnungen gestatten einen relativ langen Auszugweg, so dass das Schubladenteil in seiner Ruheposition platzsparend unmittelbar unterhalb einer Deckwandung des Kofferraumes unterbringbar ist und dennoch für ein Entnehmen oder Verstauen entsprechender Gegenstände in eine komfortable Ausziehposition zur Bedienperson hin ausgezogen werden kann, in der das Schubladenteil von oben her frei zugänglich ist. Die erfindungsgemäße Lösung eignet sich insbesondere für Fahrzeugkofferräume bei Stufenheckfahrzeugen, bei denen ein Kofferraum bis unter ein eine oberseitige Deckwandung bildendes Karosserierohbauteil ragt, das auch als Hutablage bezeichnet wird. In gleicher Weise ist es aber möglich, ein derartiges Schubladenteil auch bei Fließheck- oder Steilheck-Fahrzeugen vorzusehen, bei denen eine obere, formstabile Abdeckung des Kofferraumes etwa auf Höhe einer Fahrzeugbordkante durch ein bewegliches Platten- oder Schalenteil gebildet ist. Die spielfreien Wälzlagerungen gestatten ein komfortables Ausziehen oder Einschieben des Schubladenteiles mit geringem Kraftaufwand und zudem einen klapperfreien Sitz des Schubladenteiles. Dadurch, dass das Schubladenteil an den ausziehbaren Führungsschienen befestigt ist, können die kofferraumfesten Führungsabschnitte der Führungsschienen weitgehend unsichtbar in einem hinteren Bereich des Kofferraumes an einer entsprechenden Deckwandung angebracht sein. Dennoch kann das Schubladenteil in eine ergonomisch günstige Be- oder Entladeposition, die der Aufnahmeposition entspricht, ausgezogen werden.

In Ausgestaltung der Erfindung sind sowohl für eine ausgezogene Funktionsposition als auch für eine eingeschobene Ruheposition Endanschläge vorgesehen. Die Endanschläge verhindern, dass das Schubladenteil so weit nach vorne ausgezogen werden kann, dass die verschiedenen Schienenteile der Führungsschienen sich voneinander lösen oder beschädigt werden. Zudem wird für eine Bedienperson eine definierte Ausziehstellung geschaffen.

In weiterer Ausgestaltung der Erfindung ist für die eingeschobene Ruheposition eine Arretiervorrichtung vorgesehen, die das Schubladenteil in der Ruheposition kraftbegrenzt sichert, wobei die Sicherungskraft so gewählt ist, dass das Schubladenteil während normaler Fahrsituationen in seiner Ruheposition verbleibt und bei einer manuellen Zugbelastung in die Funktionsposition ausziehbar ist. Die kraftbegrenzte Sicherung durch die Arretiervorrichtung gewährleistet zum einen, dass im Fahrbetrieb des Kraftfahrzeugs, insbesondere bei Beschleunigungs-, Verzögerungs- oder Seitenbeschleunigungsvorgängen aufgrund von Kurvenfahrten, das Schubladenteil in seiner Ruheposition gesichert wird. Vorteilhaft ist die Sicherung aber derart kraftbegrenzt, dass eine Bedienperson das Schubladenteil aus der Ruheposition in die Auszugstellung überführen kann, ohne zuvor einen Entriegelungsvorgang bedienen zu müssen.

In weiterer Ausgestaltung der Erfindung ist die Sicherungskraft durch eine Federkraft einer Rastfeder aufgebracht.

In weiterer Ausgestaltung der Erfindung der Erfindung umfasst die Arretiervorrichtung eine Rastnase und eine korrespondierende Rastausnehmung, die fahrzeugseitig bzw. schubladenseitig angeordnet sind, und die Rastnase oder die Rastausnehmung sind mittels der Rastfeder federbelastet nachgiebig angeordnet. Die durch die wenigstens eine Rastnase und die wenigstens eine Rastausnehmung gebildete Rastanordnung wirkt in Auszieh- oder Einfahrrichtung formschlüssig, weist aber vorzugsweise in beiden Richtungen Anlaufschrägen auf, die sowohl ein Einschieben in die Ruheposition als auch ein Ausziehen aus der Ruheposition mit etwa dem gleichen manuellen Kraftaufwand ermöglichen.

In weiterer Ausgestaltung der Erfindung sind die Wälzlagerungen als Kugelkäfigführungen gestaltet. Hierdurch wird eine besonders hochwertige spielfreie Wälzlagerung sowohl längs der Führungsschienen als auch quer zu den Führungsschienen erzielt. Vorzugsweise sind - im Querschnitt gesehen - obere und untere Kugelreihen vorgesehen, die vorzugsweise derart angeordnet sind, dass sie in den Ecken eines gedachten Vierecks positioniert sind. Die Führungsschienenteile sind so ausgeführt, dass sie jeweils außen und innen an den entsprechenden Kugelreihen anliegen. Die Führungsschienenteile sind vorzugsweise aus Metall, insbesondere aus Stahl oder einer Leichtmetalllegierung, in äußerst verwindungssteifer Ausführung gestaltet.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung eine Ausführungsform einer erfindungsgemäßen Stauvorrichtung,
- Fig. 2: in perspektivischer Darstellung eine Führungsschienenanordnung für ein Schubladenteil der Stauvorrichtung nach Fig. 1,
- Fig. 3: die Führungsschienenanordnung nach Fig. 2 in einer ersten Ansicht,

- Fig. 4: die Führungsschienenanordnung nach Fig. 3 in einer um 90° gedrehten Ansicht,
- Fig. 5: die Führungsschienenanordnung nach Fig. 4 in einer um 90° gedrehten Ansicht,
- Fig. 6 bis 8: verschiedene Schnittdarstellungen der Führungsschienenanordnung nach Fig. 2 und
- Fig. 9 und 10: in schematischer Darstellung einen Ausschnitt einer Stauvorrichtung ähnlich Fig. 1 mit einer Arretiervorrichtung zur kraftbegrenzten Sicherung des Schubladenteiles in seiner Ruheposition.

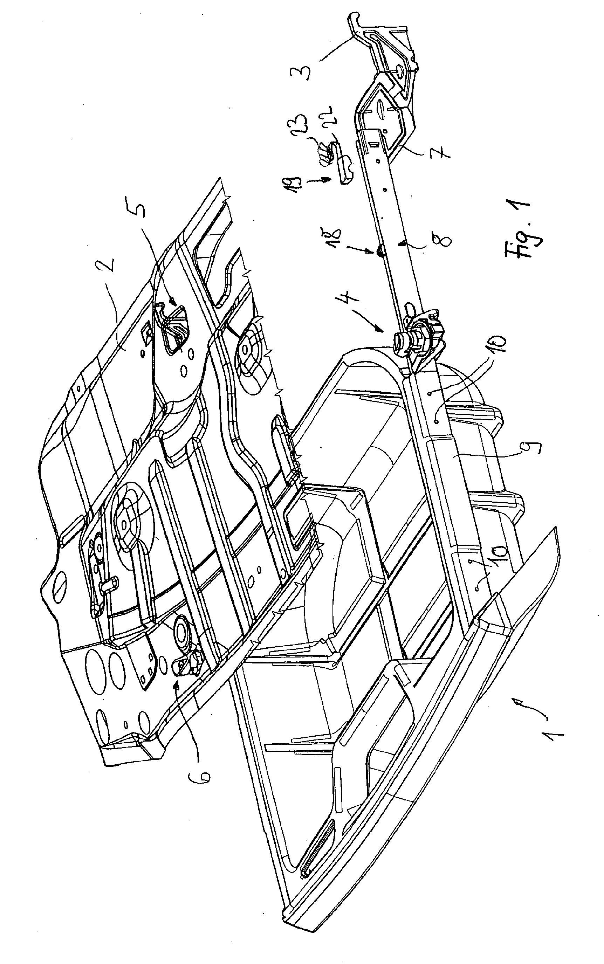

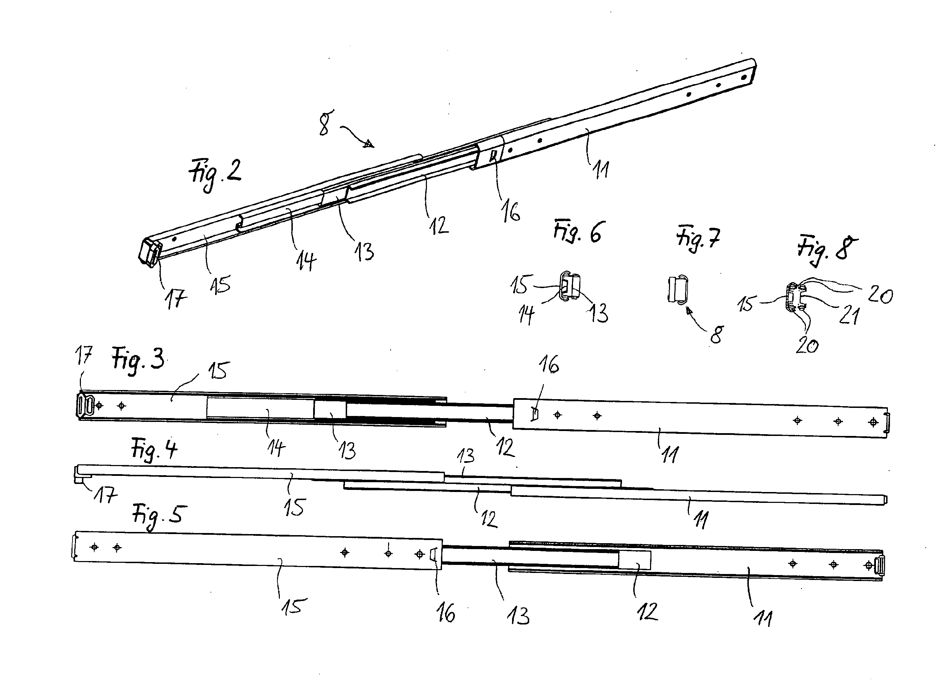

Eine Stauvorrichtung nach Fig. 1 weist ein als Kunststoffwanne gestaltetes Schubladenteil 1 auf, das mittels kofferraumseitig angeordneter Längsführungen 8 unterhalb einer als Deckwandung dienenden und ein Karosserierohbauteil darstellenden Hutablage 2 innerhalb eines nicht näher dargestellten Kofferraumes eines Personenkraftwagens angeordnet ist. Die Längsführungen 8 flankieren das Schubladenteil 1 auf gegenüberliegenden Seiten und sind etwa horizontal und in Fahrzeuglängsrichtung ausgerichtet mit Hilfe von Befestigungselementen 3, 4 an der Unterseite der Hutablage 2 verankert. Jede Längsführung 8 weist eine Führungsschienenanordnung 11 bis 15 auf (Fig. 2 bis 5). Ein kofferraumfester Schienenteil jeder Führungsschienenanordnung ist an einem Trägerteil 7 befestigt, an dem ein hinteres Befestigungselement 3 einstückig angeformt ist. An dem Trägerteil 7 ist auch das zugehörige vordere Befestigungselement 4 angeordnet. An dem Trägerteil 7, das in entsprechend spiegelsymmetrischer Ausführung auf der gegenüberliegenden Seite des Schubladenteiles 1 vorgesehen ist, ist einer der endseitigen Schienenteile 11, 15 der Führungsschienenanordnung 8 mit Hilfe von Schrauben befestigt. Die Führungsschienenanordnung 8, wie sie jeweils eine in Auszugsrichtung gesehene Längsseite des Schubladenteiles 1 flankiert, ist aus verwindungssteifen Metallprofilen aufgebaut. Jede Führungsschienenanordnung 8 weist neben dem fahrzeugfesten endseitigen Schienenteil teleskopförmig zu diesem ausziehbare Schienenprofile 12, 13, 14, 15 auf, wobei der jeweils andere endseitige Schienenteil 15 mit Hilfe von Befestigungsmitteln 10 (Fig. 1) an einem Seitenrand des Schubladenteiles 1 befestigt ist.

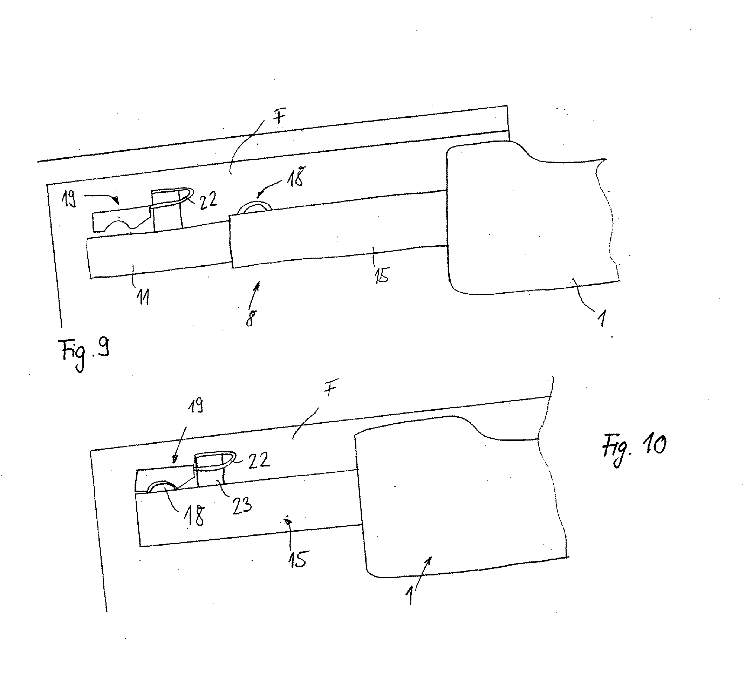

Die Führungsschienenanordnungen 18 sind vom grundsätzlichen Aufbau her ähnlich oder identisch zu hochwertigen Schubladenführungen, wie sie aus dem Möbelbereich bekannt sind. Wie anhand der Fig. 6 bis 8 erkennbar ist, ist jede Führungsschienenanordnung 8 mit Wälzlagerungen versehen, die als Kugelkäfigführungen ausgestaltet sind und eine vollkommen spielfreie Lagerung und teleskopierbare Verschiebbarkeit der Schienenteile 11 bis 15 relativ zueinander ermöglichen. Weitere Einzelheiten der Führungsschienenanordnung 8 sind den Zeichnungen, insbesondere Fig. 2 bis 8 entnehmbar. Vorzugsweise sind die beiden Schienenprofilteile 12, 13 als spiegelsymmetrisch zueinander angeordnete, C-artige Profilschienen ausgeführt und mit ihrer Rückseite gegeneinander befestigt. Die starre Verbindung zwischen den Schienenteilen 12 und 13 erfolgt insbesondere durch eine stoffschlüssige Verbindung, wie eine Verschweißung oder ähnliches.

Die endseitigen Schienenteile 11, 15 sind mit integrierten Endanschlägen 16 versehen, um ein Lösen der einzelnen Schienenteile voneinander zu vermeiden. Mit dem Bezugszeichen 17 ist ein Dämpfungselement bezeichnet, das einen metallischen Anschlag für die zusammengeschobene Ruheposition vermeidet, da es als Kunststoffteil ausgeführt ist.

Die Wälzlagerungen sind als Kugelkäfigführungen ausgeführt, wobei in Fig. 9 die Gestaltung des Käfigs 21 und die Anordnung der Kugelreihen 20 erkennbar ist.

In Fig. 1 ist eine zumindest teilweise ausgezogene Aufnahme- oder Funktionsposition des Schubladenteiles 1 dargestellt. In dieser Aufnahme- oder Funktionsposition ist ein Be- oder Entladen des Schubladenteiles 1 ermöglicht. Die Aufnahmekapazität des Schubladenteiles 1 ist auf das Aufnehmen von Kleinteilen begrenzt. In eingeschobener Ruheposition ist das Schubladenteil 1 vollständig unterhalb der Hutablage 2 positioniert und ragt somit nicht in eine durch einen Kofferraumdeckel zu öffnende oder zu verschließende Kofferraumöffnung hinein.

Um das Schubladenteil 1 auch im Fahrbetrieb des Kraftfahrzeugs, d.h. bei Beschleunigungs- oder Bremsvorgängen oder bei Querbeschleunigungen in Kurvenfahrten, in der Ruheposition zu halten, ist für die Ruheposition eine Arretiervorrichtung 18, 19 vorgesehen, die eine kraftbegrenzte Sicherung des Schubladenteiles 1 in seiner Ruheposition gewährleistet. Die Arretiervorrichtung weist wenigstens ein Rastprofilierungspaar 18, 19 auf, das einer der beiden Führungsschienenanordnungen 8 zugeordnet ist. Es ist auch möglich, jeder Führungsschienenanordnung 8 jeweils ein Rastprofilierungspaar 18, 19 zuzuordnen. Bei der dargestellten Ausführungsform ist einem gemeinsam mit dem Schubladenteil 1 beweglichen Schienenteil 15 (Fig. 1, 9 und 10) eine nach oben ragende Rastnase 18 zugeordnet. Einem kofferraumfesten Schienenteil 11 ist ein aus Kunststoff bestehender Rastkörper 19 zugeordnet, der eine Rastausnehmung aufweist, die in Einschubrichtung des Schubladenteiles 1 mit einer Anlaufschräge versehen ist. Der aus Kunststoff bestehende Rastkörper 19 ist an einer Rastfeder 22 aufgehängt, die an einem fahrzeug- und kofferraumfesten Stützteil 23 gehalten ist. Die Rastfeder 22 stellt beim dargestellten Ausführungsbeispiel eine gebogene Blattfeder dar, die ein elastisches Ausweichen der an dem Kunststoffkörper 19 vorgesehenen Rastausnehmung nach oben ermöglicht. Die Rastnase 18 ist kuppel- oder bogenartig ausgeführt. Die Rastausnehmung des Kunststoffkörpers 19 ist korrespondierend konkav oder kreisbogenartig ausgeführt. Die Rastnase 18 ist an einer Oberseite des Schienenteiles 15 angeordnet. Beim Einschieben des Schubladenteiles 1 gleitet die Rastnase 18 an der Anlaufschräge des Kunststoffkörpers 19 und damit der Rastausnehmung entlang und drückt den Kunststoffkörper gegen die Federkraft der Rastfeder 22 nach oben, bis die Rastnase 18 in die in ihrer Form auf die Rastnase 18 abgestimmte Rastausnehmung eintaucht (Fig. 10). Durch die Federkraft der Rastfeder 22 wird der Kunststoffkörper zusammen mit seiner Rastausnehmung auf die Rastnase 18 des Schienenteils 15 gedrückt und hält das Schienenteil 15 und damit auch das Schubladenteil 1 spielfrei in dieser Position. Die Federkraft der Rastfeder ist so bemessen, dass bei einem erneuten Ausziehen des Schubladenteiles 1 in Richtung der Kofferraumöffnung zu der entsprechenden Bedienperson hin die Rastnase die Rastausnehmung und damit den Kunststoffkörper gegen die Federkraft der Rastfeder 22 nach oben drücken kann. Die Bedienperson muss dabei die Zugkraft, die sie durch das Ergreifen des Schubladenteiles 1 von Hand aufbringt, so dosieren, dass der durch das Rastprofilierungspaar 18, 19 gebildete Widerstand überwunden wird. Die Rastfeder 22 ermöglicht das Ausweichen des Kunststoffkörpers nach oben, ohne dass der Kunststoffkörper oder die Rastnase beschädigt werden. Nach dem Ausziehen des Schubladenteiles 1 stellt die Rastfeder 22 den Kunststoffkörper automatisch in die unbelastete Ausgangslage gemäß Fig. 9 zurück. Bei einem erneuten Einschubvorgang wiederholt sich die zuvor beschriebene Arretierung. Die Rückhaltekräfte, die das Schubladenteil 1 im Bereich der Rastanordnung 18, 19 zurückhalten, sind vorzugsweise nicht höher als eine Auszugskraft von 50 N, die die Bedienperson für einen Ausziehvorgang aus der Ruheposition des Schubladenteiles 1 aufbringen muss, um das Schubladenteil aus der Ruheposition und damit aus der Raststellung herauszuziehen.

## Patentansprüche

1. Stauvorrichtung für einen Fahrzeugkofferraum mit fahrzeugseitigen Längsführungen im Bereich einer Oberseite des Fahrzeugkofferraumes, in denen ein Schubladenteil längsverschiebbar geführt ist, **dadurch gekennzeichnet, dass** die Längsführungen teleskopförmig ausziehbare Führungsschienenanordnungen (8) umfassen, an denen das Schubladenteil (1) befestigt ist, wobei die Führungsschienenanordnungen (8) mittels spielfreier Wälzlagerungen (20, 21) ausziehbar gelagert sind.

2. Stauvorrichtung nach Anspruch 1, **dadurch gekennzeichnet, dass** sowohl für eine ausgezogene Funktionsposition als auch für eine eingeschobene Ruheposition Endanschläge (16, 17) vorgesehen sind.

3. Stauvorrichtung nach Anspruch 1, **dadurch gekennzeichnet, dass** für die eingeschobene Ruheposition eine Arretiervorrichtung (18, 19, 22) vorgesehen ist, die das Schubladenteil (1) in Ruheposition kraftbegrenzt sichert, wobei die Sicherungskraft so gewählt ist, dass das Schubladenteil (1) während normaler Fahrsituationen in seiner Ruheposition verbleibt und bei einer manuellen Zugbelastung in die Funktionsposition ausziehbar ist.

4. Stauvorrichtung nach Anspruch 3, **dadurch gekennzeichnet, dass** die Sicherungskraft durch eine Federkraft einer Rastfeder (22) aufgebracht ist.

5. Stauvorrichtung nach Anspruch 3, **dadurch gekennzeichnet, dass** die Arretiervorrichtung wenigstens eine Rastnase (18) und wenigstens eine korrespondierende Rastausnehmung (19) umfasst, die fahrzeugseitig bzw. schubladenseitig angeordnet sind, und dass die Rastnase (18) oder die Rastausnehmung (19) mittels der Rastfeder (22) federbelastet nachgiebig angeordnet sind.

6. Stauvorrichtung nach Anspruch 1, **dadurch gekennzeichnet, dass** die Wälzlagerungen als Kugelkäfigführungen gestaltet sind.
